(19) **Europäisches Patentamt / European Patent Office / Office européen des brevets**

(11) **EP 4 083 695 A1**

(12) # EUROPEAN PATENT APPLICATION
published in accordance with Art. 153(4) EPC

(43) Date of publication:
**02.11.2022 Bulletin 2022/44**

(21) Application number: **21757467.2**

(22) Date of filing: **08.01.2021**

(51) International Patent Classification (IPC):
***G02F 1/1333*** *(2006.01)*

(52) Cooperative Patent Classification (CPC):
**G02F 1/1333**

(86) International application number:
**PCT/CN2021/070876**

(87) International publication number:
**WO 2021/164455 (26.08.2021 Gazette 2021/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.02.2020 CN 202010095747**

(71) Applicant: **Huawei Technologies Co., Ltd.**
**Shenzhen, Guangdong 518129, (CN)**

(72) Inventors:
• **XIONG, Chong**
**Shenzhen, Guangdong 518129 (CN)**
• **YU, Chunyi**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **LIQUID CRYSTAL MODULE, ELECTRONIC DEVICE AND SCREEN INTERACTION SYSTEM**

(57)     This application relates to a liquid crystal module, an electronic device, and a screen interaction system. The liquid crystal module may include a liquid crystal panel, a backlight unit, and a photoelectric sensor array. The photoelectric sensor array, the backlight unit, and the liquid crystal panel are sequentially disposed in a stacked manner. The backlight unit includes a reflection component, and at least a partial region of the reflection component is an infrared transmission region in which infrared light can be transmitted. The photoelectric sensor array includes a plurality of photoelectric sensors, and the plurality of photoelectric sensors can receive the infrared light transmitted through the infrared transmission region. In this application, the photoelectric sensor array is disposed in the liquid crystal module to receive an infrared light signal, to provide a low-cost interaction solution for a device having the liquid crystal module.

FIG. 1

## Description

This application claims priority to Chinese Patent Application No. CN202010095747.5, filed with the China National Intellectual Property Administration on February 17, 2020 and entitled "LIQUID CRYSTAL MODULE, ELECTRONIC DEVICE, AND SCREEN INTERACTION SYSTEM", which is incorporated herein by reference in its entirety.

## TECHNICAL FIELD

This application relates to a liquid crystal module, an electronic device, and a screen interaction system.

## BACKGROUND

A liquid crystal display (liquid crystal display, LCD) has features such as a small size, low power consumption, no radiation, and a soft picture, and is widely used in various electronic devices.

Currently, a solution in which a user interacts with an electronic device having an LCD mainly includes on-screen touch interaction and off-screen interaction. A solution for on-screen touch interaction includes: A conductive film with a metal grid is attached to a surface of the LCD, an infrared emitting light bar and an infrared receiving light bar are added to upper and lower or left and right outer frames of the LCD, a capacitor detector circuit is produced inside the LCD, and the like. A solution for off-screen interaction mainly includes: Floating touch is performed by using a space electric field generated by self-capacitance in the LCD, and a hand movement is obtained by using an external camera integrated at the top of the LCD, to perform gesture recognition and the like. Each solution has advantages and disadvantages.

However, currently, the market still lacks a mature solution for integrating on-screen interaction and off-screen interaction, namely, a solution in which location touch may be performed in a two-dimensional direction on the screen and remote interaction and two-dimensional coordinate positioning may be implemented off the screen.

## SUMMARY

This application aims to provide a solution that can implement both on-screen interaction and off-screen interaction.

A first aspect of this application provides a liquid crystal module, where the liquid crystal module may include a liquid crystal panel, a backlight unit, and a photoelectric sensor array. The photoelectric sensor array, the backlight unit, and the liquid crystal panel are sequentially disposed in a stacked manner, and the backlight unit is located between the photoelectric sensor array and the liquid crystal panel. The backlight unit includes a reflection component. At least a partial region of the reflection component is an infrared transmission region in which infrared light can be transmitted. The photoelectric sensor array includes a plurality of photoelectric sensors, and the plurality of photoelectric sensors can receive the infrared light transmitted through the infrared transmission region.

In this application, the photoelectric sensor array is disposed in the liquid crystal module to receive an infrared light signal, to provide a low-cost interaction solution for a device having the liquid crystal module.

Further, a plurality of holes may be disposed on the reflection component, and a region in which the plurality of holes are located is the infrared transmission region. The plurality of holes may be in a one-to-one correspondence with the plurality of photoelectric sensors in the photoelectric sensor array. This manner of disposing the infrared transmission region has low costs and is easy to operate.

Further, selective reflection components such as wavelength selective reflectors may be disposed on surfaces that are of the plurality of photoelectric sensors and that are close to the backlight unit, to transmit the infrared light passing through the hole and reflect visible light passing through the hole, where an area of the selective reflection component is not less than an area of the hole. This ensures utilization of the visible light, to improve clarity of a liquid crystal screen. Alternatively, selective reflection components such as wavelength selective reflectors may be disposed at the holes of the reflection component, to transmit the infrared light and reflect visible light. Similarly, an area of the selective reflection component is not less than an area of the hole.

Further, the entire reflection component may be a reflection component that can reflect visible light and transmit the infrared light, for example, the reflection component may be a wavelength selective reflector.

A second aspect of this application provides an electronic device, where the electronic device may include a memory, a processor, and the liquid crystal module provided in any one of the first aspect or the implementations of the first aspect. The memory is configured to store instructions and locations of all photoelectric sensors in the photoelectric sensor array. The processor is configured to: read the instructions and the locations of the photoelectric sensors, and determine, based on the locations of the photoelectric sensors and intensity of infrared light received by the photoelectric sensors, a location at which the infrared light is projected on the liquid crystal panel.

Further, the processor is configured to: perform Gaussian fitting on the locations of the photoelectric sensors and the intensity of the infrared light received by the photoelectric sensors, to obtain a location corresponding to an intensity peak, where the intensity peak is an intensity peak of the infrared light received by the photoelectric sensors, and use the location corresponding to the intensity peak as the location at which the infrared light is projected on the liquid crystal panel. Because the intensity peak is a result obtained through Gaussian fitting, the intensity peak may not be one of intensity data received by all the photoelectric sensors, but is higher than the intensity data of the infrared light received by all the photoelectric sensors. The location corresponding to the intensity peak of the infrared light may not be a location of a photoelectric sensor, but is a location between two or more adjacent sensors. In this manner, a projection location of the infrared light can be positioned more accurately.

Further, the processor is configured to: determine highest intensity in the intensity of the infrared light received by the photoelectric sensors, and use, as the location at which the infrared light is projected on the liquid crystal panel, a location of a photoelectric sensor that receives the highest intensity. In this manner, no data fitting is performed. Instead, the photoelectric sensor that receives the highest light intensity is directly found, and the location thereof is used as a projection location of the infrared light. Therefore, a system has a higher response speed.

Further, the infrared light may be a pulsed infrared light signal, and a frequency of the pulsed infrared light signal may be half of a drive frequency of the photoelectric sensor array. The infrared light signal is modulated into half of a drive frequency of a control unit of the photoelectric sensor array by using a pulse signal. Therefore, an interference light signal may be removed by obtaining a difference between two adjacent frames of data, to effectively improve interference immunity of a system. In addition, a frequency of a received infrared light signal is determined, so that the electronic device can also more easily determine whether the received infrared light signal is infrared light emitted by an infrared light emitter that matches the electronic device.

A third aspect of this application provides a screen interaction system, where the screen interaction system may include an electronic device and an infrared light emitter. The infrared light emitter is configured to emit infrared light. The electronic device may include a liquid crystal module. The liquid crystal module includes a liquid crystal panel, a backlight unit, and a photoelectric sensor array. The photoelectric sensor array, the backlight unit, and the liquid crystal panel are sequentially disposed in a stacked manner. The backlight unit includes a reflection component. The reflection component is configured to reflect visible light. At least a partial region of the reflection component is an infrared transmission region in which the infrared light emitted by the infrared light emitter can be transmitted. The photoelectric sensor array includes a plurality of photoelectric sensors, and the plurality of photoelectric sensors can receive the infrared light transmitted through the infrared transmission region.

Further, the infrared light emitter may include a pulse drive apparatus. The pulse drive apparatus may be configured to modulate the infrared light emitted by the infrared light emitter, so that the light emitted by the infrared light emitter is a pulsed infrared light signal. A frequency of the pulsed infrared light signal is half of a drive frequency of the photoelectric sensor array.

In this application, the infrared light signal is modulated into half of a drive frequency of a control unit of the photoelectric sensor array by using a pulse signal. Therefore, an interference light signal may be removed by obtaining a difference between two adjacent frames of data, to effectively improve interference immunity of a system. In addition, a frequency of a received infrared light signal is determined, so that the electronic device can also more easily determine whether the received infrared light signal is infrared light emitted by an infrared light emitter that matches the electronic device.

In this application, the photoelectric sensor array is disposed in the liquid crystal module of the electronic device, and communication is performed on or off the screen of the electronic device with the photoelectric sensor array in the electronic device by using the infrared light emitter. Therefore, functions of on-screen interaction and off-screen interaction between a user and the electronic device can be implemented by using relatively low costs.

**BRIEF DESCRIPTION OF DRAWINGS**

FIG. 1 is a schematic diagram of a screen interaction system according to an embodiment of this application;
FIG. 2 shows an example of a structure of an electronic device according to an embodiment of the present invention;
FIG. 3 shows an example of a photoelectric sensor array according to an embodiment of this application;
FIG. 4 is a schematic diagram of an internal structure of an infrared light emitter according to an embodiment of this application;
FIG. 5A shows a first example of a structure of a reflector according to an embodiment of this application;
FIG. 5B shows an example of attaching a film to a photoelectric sensor array according to an embodiment of this application;
FIG. 6 shows a second example of a structure of a reflector according to an embodiment of this application;

FIG. 7 shows a third example of a structure of a reflector according to an embodiment of this application;

FIG. 8 shows an example of a control system of a photoelectric sensor array according to an embodiment of this application;

FIG. 9A shows an example in which an infrared light spot covers a plurality of photoelectric sensors according to an embodiment of this application;

FIG. 9B shows light intensity values respectively received by nine photoelectric sensors in FIG. 9A;

FIG. 10A shows an example of a $k^{th}$ frame of light intensity data corresponding to nine photoelectric sensors covered by an infrared light spot in an ideal case according to an embodiment of this application;

FIG. 10B shows an example of a $(k+1)^{th}$ frame of light intensity data corresponding to nine photoelectric sensors covered by an infrared light spot in an ideal case according to an embodiment of this application;

FIG. 11A shows an example of a $k^{th}$ frame of light intensity data corresponding to nine photoelectric sensors covered by an infrared light spot in an actual case according to an embodiment of this application; and

FIG. 11B shows an example of a $(k+1)^{th}$ frame of light intensity data corresponding to nine photoelectric sensors covered by an infrared light spot in an actual case according to an embodiment of this application.

## DESCRIPTION OF EMBODIMENTS

The following further describes this application with reference to specific embodiments and the accompanying drawings. It may be understood that the specific embodiments described herein are merely intended to explain this application, but are not intended to limit this application. In addition, for ease of description, only some but not all of structures or processes related to this application are shown in the accompanying drawings. It should be noted that, in this specification, similar reference numerals and letters represent similar items in the following accompanying drawings.

Illustrative embodiments of this application include but are not limited to a liquid crystal module, a screen interaction method, and a screen interaction system.

Various aspects of the illustrative embodiments are described by using terms commonly used by persons skilled in the art, to convey their working substance to other persons skilled in the art. However, for persons skilled in the art, it is apparent that some alternative embodiments are implemented by using a part of described features. For the purpose of explanation, specific numbers and configurations are described for a more thorough understanding of the illustrative embodiments. However, for persons skilled in the art, it is apparent that the alternative embodiments may be implemented without specific details. In some other cases, some well-known features are omitted or simplified in this specification to prevent the illustrative embodiments of this application from being ambiguous.

In the accompanying drawings, some structural features may be shown in a particular arrangement and/or sequence. However, it should be understood that such a particular arrangement and/or sequence is not necessary. In some embodiments, these features may be described in a manner and/or sequence different from that shown in the illustrative accompanying drawings. In addition, structural features included in particular accompanying drawings do not mean that all embodiments need to include such features. In some embodiments, the features may not be included, or the features may be combined with other features.

To make the objectives, technical solutions, and advantages of this application clearer, the following further describes the implementations of this application in detail with reference to the accompanying drawings.

A solution provided in this application is intended to integrate on-screen interaction and off-screen interaction between a user and an electronic device having a liquid crystal display (liquid crystal display, LCD). Therefore, a low-cost interaction solution suitable for the LCD is provided.

In some embodiments of this application, on-screen interaction is mainly interaction that requires contact with a display screen. For example, a touch pen (also referred to as a "stylus"), a finger, or the like taps or slides on a surface of a liquid crystal panel of an electronic device, and the electronic device detects a movement track of the touch pen, the finger, or the like, and performs a corresponding operation according to a preset rule. For example, a writing whiteboard is a typical application for on-screen interaction, that is, the stylus slides on the surface of the liquid crystal panel, so that the electronic device detects a slide track of the stylus to implement a writing function. The stylus may be an active stylus, or may be a passive stylus. The active stylus may also be referred to as an "active pen". A circuit is disposed in the active pen, and the active pen may transmit a signal to a screen, so that the screen detects coordinates of the pen. The passive stylus may also be referred to as a "passive pen". Similar to a function of a finger, the passive pen does not transmit a signal, but may change a capacitance of a touchscreen and the like when the passive pen is in contact with the touchscreen.

Off-screen interaction is mainly interaction that does not require contact with the surface of the screen. For example, interaction information of the user is identified by using a gesture, a pointing location, or a movement track of the hand or the stylus off the surface of the screen, to perform an operation such as selecting or controlling a menu in combination with a UI interface of an electronic device. A common off-screen interaction scenario includes sports games (for example, the active pen is controlled in front of the screen to be waved against the LCD screen, so that the electronic device can implement some sports games such as Fruit Ninja by detecting a waving track of the active pen) or remote control (a menu interface on the LCD screen is clicked by using a remote control, the active pen, or the like, to implement a remote operation such as remote control shopping).

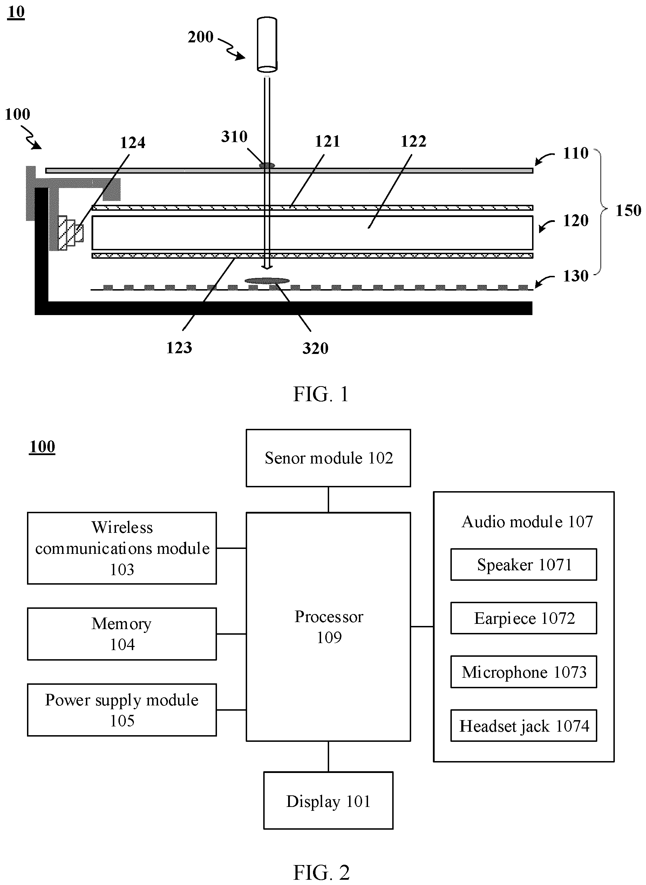

Embodiments of this application provide a low-cost interaction solution that is suitable for an LCD and in which communication is performed by using infrared light. FIG. 1 shows a screen interaction system according to an embodiment of this application.

As shown in FIG. 1, this embodiment of this application provides a screen interaction system 10, including an infrared light emitter 200 and an electronic device 100. In this embodiment of this application, the electronic device 100 may be various devices including an LCD, for example, a television, a game console, a display device, an outdoor display screen, a music player, a desktop computer, a laptop computer, and a tablet computer.

FIG. 2 shows an example of a structure of an electronic device 100 according to an embodiment of the present invention.

As shown in FIG. 2, the electronic device 100 may include a processor 109, a display 101, a sensor module 102, a wireless communications module 103, a memory 104, a power supply 105, an audio module 107, and the like.

The processor 109 may include one or more processing units or components, for example, may include a processing module or a processing circuit of a central processing unit CPU (Central Processing Unit), a graphics processing unit GPU (Graphics Processing Unit), a digital signal processor DSP, a microprocessor MCU (Micro-programmed Control Unit), an AI (Artificial Intelligence, artificial intelligence) processor, or a programmable logic device FPGA (Field Programmable Gate Array). Different processing units may be independent components, or may be integrated into one or more processors. A storage unit may be disposed in the processor 109, to store instructions and/or data.

The display 101 is configured to display a human-computer interaction interface, an image, a video, and the like. In this embodiment of this application, the display 101 may be an LCD.

The sensor module 102 may include a photoelectric sensor, configured to receive infrared light, for example, an infrared photodiode in the following descriptions. In some embodiments, the sensor module may further include another sensor such as a pressure sensor, a gyroscope sensor, a barometric pressure sensor, a magnetic sensor, a distance sensor, an optical proximity sensor, a fingerprint sensor, a temperature sensor, and a touch sensor.

The wireless communications module 103 may include an antenna, and receive and send an electromagnetic wave by using the antenna. The wireless communications module 103 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like and that is applied to the electronic device 100. The electronic device 100 can communicate with a network and another device by using a wireless communication technology.

The power supply module 105 may include a power supply, a power management component, and the like. The power management component is configured to manage charging of the power supply and power supplying to another module performed by the power supply.

The audio module 107 is configured to convert digital audio information into an analog audio signal for output, or convert an analog audio input into a digital audio signal. The audio module 107 may be further configured to: code and decode an audio signal. In some embodiments, the audio module 107 may be disposed in the processor 109, or some functional modules of the audio module 107 are disposed in the processor 109.

As shown in FIG. 2, the audio module 107 may include a speaker 1071, an earpiece 1072, a microphone 1073, and a headset jack 1074. The speaker 1071, also referred to as a "horn", is configured to convert an audio signal into a sound signal for output. The microphone 1073, also referred to as a "mike" or a "mic", is configured to convert a sound signal into an electrical signal. At least one microphone 1073 may be disposed in the electronic device 100. In some other embodiments, two microphones 1073 may be disposed in the electronic device 100, to implement a noise reduction function in addition to collecting a sound signal. In some other embodiments, three, four, or more microphones 1073 may alternatively be disposed in the electronic device 100, to collect a sound signal, reduce noise, identify a sound source, implement a directional recording function, and the like. The headset jack 1074 may be configured to connect to a headset.

It may be understood that the structure shown in this embodiment of the present invention does not constitute a specific limitation on the electronic device 100. In some other embodiments of this application, the electronic device 100 may include more or fewer components than those shown in the figure, combine some components, split some components, or have different component arrangements. The components shown in the figure may be implemented in hardware, software, or a combination of software and hardware.

Refer to FIG. 1. The LCD in the electronic device 100 may include a liquid crystal module 150. In some embodiments of this application, the liquid crystal module 150 may include a liquid crystal panel 110, a backlight unit (Backlight Unit, BLU) 120, and a photoelectric sensor array 130 that are sequentially disposed in a stacked manner, and the BLU 120 is located between the photoelectric sensor array 130 and the liquid crystal panel 110.

The liquid crystal panel 110 is a basic component of the liquid crystal module 150. Liquid crystal display passively emits light. The liquid crystal panel 110 does not emit light, but is illuminated by the BLU 120 below the liquid crystal panel 110. The liquid crystal panel 110 uses a liquid crystal as a basic material. A liquid crystal material is filled between two parallel plates, and an arrangement of molecules inside the liquid crystal material is changed by using a voltage, so that a light transmittance of an external light source is changed, and electro-optic conversion is completed, to implement light shielding and light transmission, so as to display images with different depths and shades. Then, a color image may be displayed by adding a colored filter layer between two flat panels by using different excitation of three primary color signals R, G, and B. When light emitted by the BLU 120 is irradiated on the liquid crystal panel 110, the light is first transmitted upward by using a lower polarizer. After a polarization direction of the light is changed, the light is in contact with the colored filter to generate a color. Finally, the light is incident to an upper polarizer. After the liquid crystal changes the polarization direction, some light may be emitted, and some light is absorbed. Each pixel on the entire liquid crystal panel may be used to determine intensity of the emitted light, to generate an image.

The BLU 120 is configured to supply, to the liquid crystal panel 110, uniformly distributed light that has sufficient brightness, and a light emitting effect of the BLU 120 directly affects a visual effect of the LCD. The BLU generally includes various components such as a light emitting component, a light guide component, and a reflection component.

FIG. 1 shows an example of a basic structure of the BLU 120 in the liquid crystal module 150. The BLU 120 may be a flat-panel uniform lighting apparatus, and may include a light source 124, an optical film 121, a light guide plate 122, and a reflector 123.

As a light emitting component in the BLU, the light source 124 may include but is not limited to a cold-cathode fluorescent lamp or an LED light bar. The light source 124 may be disposed on both sides or one side (which may be a long side, or may be a short side) of the entire BLU 120. The cold-cathode fluorescent lamp is a line light source, and the LED is a point light source. The light guide plate 122 needs to be used to convert these light sources into surface light sources.

The light guide plate 122 serves as a light guide component in the BLU, and a function of the light guide plate 122 is to guide a light scattering direction, to improve brightness of the panel and ensure brightness uniformity of the panel. The light guide plate 122 is generally made of acrylic plastic with a high light transmittance, and a surface thereof is very smooth and flat, so that most internal light is regularly and totally reflected on the flat surface of the light guide plate 122 without being emitted to the outside of the light guide plate 122. White dots are generally printed at the bottom of the light guide plate 122 of the liquid crystal module 150. At a location at which the dot is printed on the light guide plate, the light is not regularly and totally reflected, but is emitted to the top of the light guide plate 122. A dot density at each location is controlled, so that an amount of light emitted by the light guide plate at the location can be controlled. With the precisely designed dots on the light guide plate 122, light that is incident from both sides may be uniformly spread on an entire plane. The optical film 121 may be disposed above the light guide plate 122, and the optical film 121 may play a role of making light uniform, converging wide-angle light for front observation, and the like.

As a reflection component in the BLU, the reflector 123 is generally disposed at the bottom of the light guide plate 122, and may be configured to: reflect light in a propagation process and reflect light leaked from the bottom of the light guide plate 122 back to a region in which the light guide plate 122 is located, so that utilization of light emitted by the light source 124 is maximized.

It should be noted that a structure of the BLU 120 shown in FIG. 1 is merely an example for description, and is not used to limit this application. In various embodiments of this application, BLUs having different structures may be used based on an actual situation, for example, an edge-lit BLU whose light emitting source is disposed on a side, a direct-lit BLU whose light source is disposed directly below, and a hollow-type BLU that uses a hot-cathode fluorescent lamp as a light emitting source and uses air as a transfer medium of the light source.

The photoelectric sensor array 130 is disposed below the reflector 123 of the backlight unit 120, namely, a side that is of the BLU and that is far away from the liquid crystal panel 110. The photoelectric sensor array 130 may include a plurality of photoelectric sensors. In this embodiment of this application, the photoelectric sensor may be an infrared photoelectric sensor, and a form of the photoelectric sensor may include but is not limited to a surface-mount photodiode (Photo-Diode, PD). When the BLU 120 can transmit infrared light, infrared light emitted by the infrared light emitter 200 may be transmitted through the liquid crystal panel 110 and the BLU 120 to arrive at the infrared photoelectric sensor. A center location of the infrared light emitted by the infrared light emitter 200 may be determined by determining light intensity of the infrared light received by each photoelectric sensor in the photoelectric sensor array 130, to implement interaction between a user and the electronic device 100.

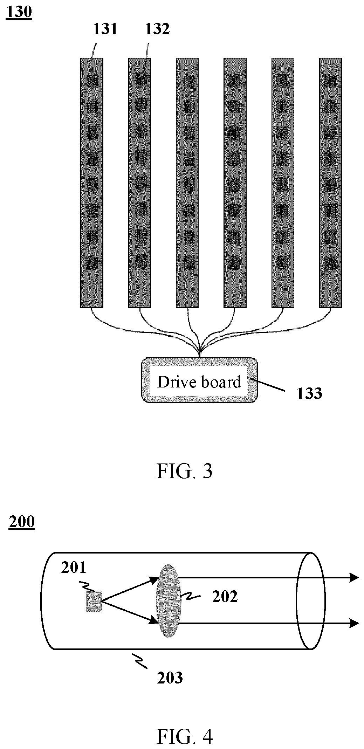

The following uses the surface-mount PD as an example of the photoelectric sensor to describe a specific structure of the photoelectric sensor array 130. FIG. 3 shows an example of a photoelectric sensor array 130 according to an embodiment of this application.

As shown in FIG. 3, a plurality of infrared PDs 132 may be fastened to a substrate 131. In some embodiments of this application, the substrate 131 may be a printed circuit board (Printed circuit board, PCB). The plurality of infrared PDs 132 are fastened to the PCB board according to a preset arrangement rule, to form the photoelectric sensor array 130, and are driven by a drive board 133 together. A drive and control circuit may be disposed on the drive board 133, and is configured to drive and control the infrared PD 132 on the substrate 131.

In different implementations, as shown in FIG. 3, the substrate 131 may be divided into a plurality of pieces, and some infrared PDs 132 are disposed on each substrate 131. Alternatively, the substrate 131 may be an entire piece, and all infrared PDs 132 are fastened to the integrated substrate 131. The drive board 133 may be integrated with the substrate 131 on which the infrared PD 132 is disposed, or may be independent of the substrate 131 on which the infrared PD 132 is disposed.

The infrared light emitter 200 may be implemented in a manner such as an infrared laser pen and a remote control, and is configured to emit infrared light that matches the infrared PD 132 in the photoelectric sensor array 130, that is, a wavelength of the infrared light emitter 200 needs to match a wavelength response range of the infrared PD 132. For example, when the wavelength of the infrared light emitter is 840 nm, the response wavelength range of the infrared PD 132 needs to cover 840 nm.

The following describes an example of an internal structure of the infrared light emitter 200 with reference to FIG. 4.

As shown in FIG. 4, the infrared light emitter 200 may include a housing 203, a laser 201, a collimation lens 202, and a switch (not shown). The laser 201 may be a vertical-cavity surface-emitting laser (vertical-cavity surface-emitting laser, VCSEL). Compared with an edge-lit laser, a divergence angle of an output beam generated by the VCSEL is relatively small, and may be generally controlled within 10°. The collimation lens 202 is configured to convert light emitted by the VCSEL into parallel light. Through cooperation between the laser 201 and the collimation lens 202, regardless of a distance from the infrared light emitter 200 to the LCD screen of the electronic device 100, a size of a light spot on the LCD screen may be kept the same. The user controls, by using the switch, the infrared light emitter 200 to emit infrared light and irradiate the infrared light to the LCD of the electronic device 100, and determines an indicated location based on a light signal received by the infrared PD 132, so that interaction can be implemented.

It should be noted that a structure of the infrared light emitter 200 shown in FIG. 4 is merely an example for description, and is not used to limit this application. In various embodiments of this application, the infrared light emitter 200 may include more or fewer components, and a structure thereof may also be changed based on an actual situation.

The reflector 123 in the BLU 120 may generally reflect at least 98% of visible light and infrared light. To enable the infrared PD 132 to successfully receive the infrared light emitted by the infrared light emitter, the reflector 123 may be processed, so that the reflector 123 can transmit the infrared light.

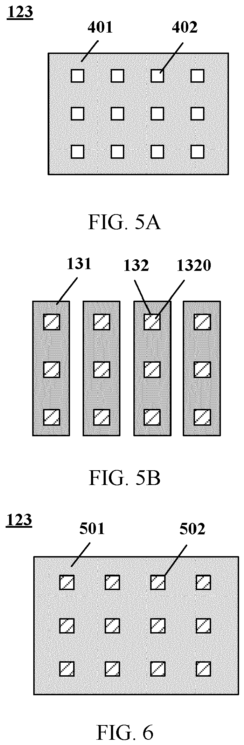

The following describes various embodiments of the reflector 123 with reference to FIG. 5A to FIG. 7.

FIG. 5A shows an example of a structure of a reflector 123 according to an embodiment of this application.

In some embodiments of this application, the reflector 123 is a reflector that is made of a common material and that reflects both the visible light and the infrared light. To enable the infrared PD 132 to successfully receive the infrared light emitted by the infrared light emitter, a hole may be disposed, based on an arrangement of the infrared PD 132, at a location that is on a surface of the reflector 123 made of the common material and that corresponds to the infrared PD 132, to facilitate transmission of the infrared light. As shown in FIG. 5A, the reflector 123 includes a common reflection material 401 and a hole 402 disposed on a surface of the common reflection material 401. The hole 402 may be a through hole, and a location of the hole 402 corresponds to a location of a photosensitive region of the infrared PD 132, so that the infrared PD 132 can receive the infrared light by using the hole 402. Based on a processing condition and different shapes of the photosensitive region of the infrared PD 132, the hole 402 may be disposed as various shapes such as a circle or a polygon. This is not limited herein. In this manner, the hole is directly disposed on the common reflector, so that the infrared PD 132 disposed below the reflector receives the infrared light, and costs are relatively low. The infrared PD 132 can sense the infrared light even though other light (such as visible light) passes through the hole 402 together with the infrared light and is projected on the infrared PD 132.

In some other embodiments of this application, when the hole is disposed on the reflector 123 in the BLU 120, a small wavelength selective reflector (such as an enhanced specular reflector (Enhanced Specular Reflector, ESR)) 1320 for reflecting the visible light and transmitting the infrared light may be attached to a surface that is of the infrared PD 132 and that is close to the backlight unit. As shown in FIG. 5B, the wavelength selective reflector 1320 is configured to: reflect the visible light irradiated on the surface of the infrared PD 132, and transmit the infrared light irradiated on the surface of the infrared PD 132. With the wavelength selective reflector 1320, the visible light emitted from the hole 402 is reflected back to a conductive region. This can ensure utilization of the light emitted by the light source 124, to improve clarity of the liquid crystal screen. In addition, because only the infrared light is irradiated on the infrared PD 132, interference from non-infrared light to the infrared PD 132 can be avoided. This improves sensitivity and efficiency of the infrared PD 132.

In various embodiments of this application, an area of the wavelength selective reflector 1320 attached to the surface of the infrared PD 132 is preferably not less than an area of the hole 402, to ensure a reflection effect. In addition, a shape of the wavelength selective reflector 1320 attached to the surface of the infrared PD 132 may be consistent with a shape of the hole 402, or may be inconsistent with a shape of the hole 402 but an area thereof is large enough to cover a size of the hole 402.

FIG. 6 shows an example of another structure of a reflector 123 according to an embodiment of this application.

In some embodiments of this application, the reflector 123 may include two types of reflection materials: a reflection material 501 that reflects both the visible light and the infrared light, and a reflection material (such as an ESR) 502 that can reflect the visible light and transmit the infrared light. The ESR 502 may be disposed at a location corresponding to a photosensitive region of the infrared PD 132, so that the infrared PD 132 can receive the infrared light by using the ESR 502. In this embodiment, similar to FIG. 5A, a hole may be disposed at a location that is on a surface of the reflector 123 made of a common material and that corresponds to the infrared PD 132. However, the reflection material 502 that reflects the visible light and transmits the infrared light is no longer attached to the infrared PD 132, but is attached to the hole, so that a reflection material of a region corresponding to the photosensitive region of the infrared PD 132 is the reflection material 502 that has a multi-layer film structure and that reflects the visible light and transmits the infrared light, and another region is the common reflection material 501 that reflects both the visible light and the infrared light.

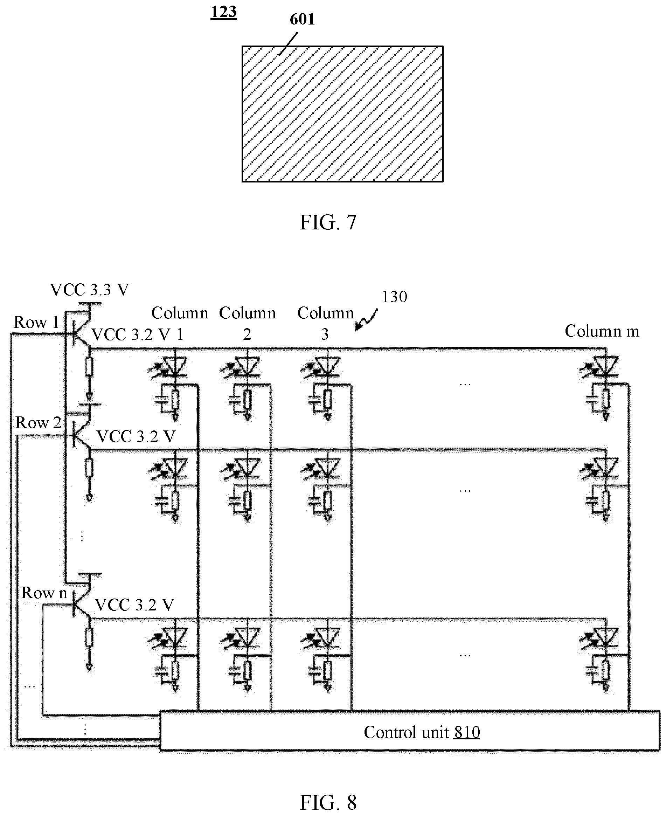

FIG. 7 shows an example of still another structure of a reflector 123 according to an embodiment of this application.

In some other embodiments of this application, to enable the infrared PD 132 to successfully receive the infrared light, a reflection material 601 that has a multi-layer film structure and that can reflect the visible light and transmit the infrared light may be directly used as the reflector 123 and disposed above the infrared PD 132, that is, the reflector 123 is a wavelength selective reflector that can reflect the visible light and transmit the infrared light.

FIG. 5A to FIG. 7 show various design examples of the reflector 123. In different implementations of this application, persons skilled in the art may alternatively design the reflector 123 in another manner based on the foregoing examples of the structures, so that the BLU 120 can successfully transmit the infrared light, and the infrared PD 132 disposed below the BLU 120 can successfully receive the infrared light emitted by the infrared light emitter 200. After the infrared PD 132 receives the infrared light emitted by the infrared light emitter 200, a location indicated by the user by using the infrared light emitter may be determined by analyzing light intensity of each infrared PD 132 in the photoelectric sensor array 130.

With reference to FIG. 8 to FIG. 9B, the following describes a specific solution of determining the indicated location by using the light intensity of the photoelectric sensor array 130 in this embodiment of this application.

As described above, the photoelectric sensor array 130 disposed below the reflector 123 may include a plurality of infrared PDs 132. In some embodiments of this application, a location of each infrared PD 132 may be pre-stored in the memory 104 of the electronic device 100. The location of the infrared PD 132 may be coordinates, a number, or other information that may represent the location of the infrared PD. This embodiment of the present invention is described by using the coordinates as an example. For the photoelectric sensor array 130 including the surface-mount infrared PD, in some embodiments of this application, a low-cost drive and control solution may be used. As shown in FIG. 8, a single-chip microcomputer, an FPGA, or the like is used as a control unit 810 to perform control based on a row and a column of the PD array. One channel of the control unit 810 may control a transistor of one row switch of the PD array or signal receiving of one column of PDs (or one channel controls a transistor of one column switch of the PD array or signal receiving of one row of PDs). Therefore, for the PD array 130 including n rows and m columns, only n+m channels are required to implement drive and control. For example, 200 PDs in 20 rows and 10 columns are used as an example. In this case, only 30 channels are required to implement drive.

When a voltage is applied to the infrared PD component, if light is radiated to the photosensitive region of the PD, a light current is generated. If the light current flows through a load resistor, a voltage signal is generated. The current signal or the voltage signal may be collected by the control unit 810. The control unit 810 may collect a signal of each PD through row-by-row or column-by-column scanning. For example, a drive frequency of the control unit 810 may be set. For example, the drive frequency may be 240 hertz, that is, 240 times per second. The control unit 810 may transmit 240 frames of signals of the PD array to the processor 109 of the electronic device 100 per second. When the user irradiates the liquid crystal panel 110 of the electronic device 100 with the infrared light emitter, the infrared light is transmitted through the liquid crystal panel 110 and the backlight module 120, and is irradiated to the photoelectric sensor array 130. An electrical signal of an infrared PD 132 that receives the infrared light is greatly different from an electrical signal of another PD that does not receive the infrared light. The processor 109 may determine, by comparing a difference between the 240 matrix signals and based on the pre-stored coordinates of each infrared PD, the location indicated by the user, to determine whether the user interacts with the LCD. In a specific implementation process, the wavelength of the infrared light emitter needs to match the wavelength response range of the infrared PD 132. For example, when the wavelength of the infrared light emitter is 840 nm, the response wavelength range of the infrared PD 132 needs to cover 840 nm.

In some embodiments of this application, there may be one or more infrared PDs 132 that receive the infrared light. When there is only one infrared PD 132 that receives the infrared light, light intensity of the infrared PD 132 that receives the infrared light significantly exceeds that of another infrared PD 132 that does not receive the infrared light.

Therefore, the location indicated by the user may be determined by directly determining coordinates of the infrared PD 132 that corresponds to highest light intensity. When an infrared light spot covers a plurality of infrared PDs 132, a center location of the light spot may be determined by using light intensity received by the infrared PD 132, and the center location is used as the indicated location, that is, the indicated location of the user is determined by using distribution of the light intensity.

In this embodiment of this application, the infrared PD 132 is disposed below the reflector 123 in the BLU 120, and a material of the optical film 121 in the BLU 120 generally plays a role of diffusing light. Therefore, when the infrared light received by the liquid crystal panel 110 passes through the BLU 120 and arrives at the photoelectric sensor array 130, the infrared light spot expands. As shown in FIG. 1, when the infrared light emitted by the infrared light emitter 200 arrives at the liquid crystal panel 110, a first light spot 310 is formed. After the infrared light passes through the liquid crystal panel 110 and the BLU 120 to arrive at the photoelectric sensor array 130, a second light spot 320 is formed. An area of the second light spot 320 is greater than an area of the first light spot 310 due to a diffusion function of the optical film 121. In addition, in some embodiments, a distance between the infrared PDs 132 may be relatively small. In this case, when the infrared light emitted by the infrared light emitter falls on the photoelectric sensor array 130, the infrared light spot may cover a plurality of infrared PDs 132.

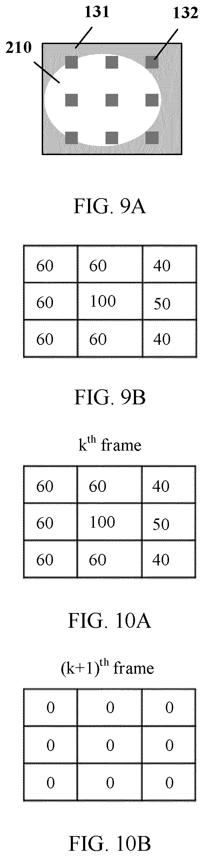

With reference to FIG. 9A and FIG. 9B, the following describes an embodiment in which when the infrared light spot may cover a plurality of infrared PDs 132, the indicated location is determined based on distribution of light intensity received by the infrared PD 132.

FIG. 9A shows an example in which an infrared light spot covers a plurality of infrared PDs 132. In some embodiments of this application, a plurality of infrared PDs 132 are disposed on the substrate 131 disposed below the reflector 123, and coordinates of each infrared PD 132 may be pre-stored in the memory of the electronic device 100. It is assumed that an infrared light spot 210 covers, at a moment, nine infrared PDs 132 arranged based on a 3*3 matrix. As shown in FIG. 9A, light intensity received by the nine infrared PDs 132 that receive infrared light signals may be different. For example, light intensity respectively received by the nine infrared PDs 132 in FIG. 9A may be shown in FIG. 9B.

After receiving a signal from each infrared PD 132, the processor 109 of the electronic device 100 may determine the indicated location based on light intensity data received by each infrared PD 132. The coordinates of each infrared PD 132 have already been pre-stored in the processor 109. Therefore, only one time of peak determining needs to be performed on the data collected by the infrared PD 132 to find a location corresponding to a light intensity peak in a region, and the location corresponding to the light intensity peak may be considered as a positioning location of the infrared light source, namely, the indicated location of the user.

In some embodiments of this application, the light intensity peak may be obtained through Gaussian fitting by using the light intensity data received by each infrared PD 132. A reason is as follows: For most laser beams, ideal distribution of light intensity of a light spot should meet Gaussian distribution, that is, at any one cross section (x, y) perpendicular to the beam, distribution of light intensity meets the Gaussian function:

$$I(x,y) = H \cdot exp\left\{ -\left[ \frac{(x-x_0)^2}{\sigma_1{}^2} + \frac{(y-y_0)^2}{\sigma_2{}^2} \right] \right\} \tag{1}$$

In the formula, $I(x, y)$ is light intensity of the laser beam at the cross section $(x, y)$, H is a light intensity amplitude of the light spot at the cross section, $(x_0, y_0)$ is a location corresponding to a light intensity peak, and $\sigma_1$ and $\sigma_2$ are standard deviations in two directions. The parameters $\sigma_1$ and $\sigma_2$ may be determined based on the least square principle and by using the foregoing function and the light intensity data received by each infrared photoelectric sensor, to obtain $(x_0, y_0)$ that is the positioning location of the infrared light source, namely, the indicated location of the user.

The light intensity peak data $I(x_0, y_0)$ obtained through the foregoing Gaussian fitting may not be one of the light intensity data received by all the PDs, but is higher than the intensity data of the infrared light received by all the PDs. Similarly, the location $(x_0, y_0)$ corresponding to the intensity peak of the infrared light may not be a location of a PD, but is a location between two or more adjacent PDs. For example, in the example described above, the processor 109 of the electronic device 100 may learn, through calculation by using the nine pieces of data shown in FIG. 9B, that the location corresponding to the light intensity peak is a location approximately between a PD in the second row and the first column and a PD in the second row and the second column.

In the foregoing manner of Gaussian fitting, the projection location of the infrared light, namely, the indicated location of the user, canbe accurately positioned. However, in some embodiments, highly precise positioning may not be required. In this case, data fitting may not be performed. Instead, an infrared PD 132 that receives the highest light intensity is directly found based on intensity of a light signal received by each infrared PD 132, and coordinates of the infrared PD 132 are used as the indicated location, to improve a response speed of the system.

In some embodiments of this application, a quantity of infrared photoelectric sensors 132 may be increased to improve positioning accuracy, or ca quantity of infrared photoelectric sensors 132 may be reduced to reduce costs and reduce an amount of data that needs to be processed, to improve the response speed of the system.

With reference to FIG. 9A and FIG. 9B, the foregoing describes an example of determining the indicated location based on the distribution of the light intensity received by the infrared PD 132. However, persons skilled in the art should understand that the foregoing manner of obtaining the indicated location does not constitute a limitation on this application. In some other implementations, the indicated location may be obtained in another manner. This is not limited in this application.

This embodiment of this application provides a function of determining the indicated location of the user, and an implementation of specific interaction between the user and the LCD generally further requires cooperation of a user interface (user interface, UI) design. In actual application, a specific interaction rule may be set based on the UI design, and the interaction rule may include but is not limited to a specific instruction represented by tapping or sliding by the user. For example, it is assumed that the interaction rule is "When the electronic device 100 detects that the infrared light spot quickly moves downward on an edge of the LCD of the electronic device 100, it indicates that the user wants to turn the page." In this case, when the user views a photo by using the LCD of the electronic device 100, the user may control the infrared light emitter (for example, a moving emitter), so that the processor learns, through calculation, that the infrared light irradiated on the LCD quickly moves downward on the edge of the LCD, to turn the page to view a next photo.

In addition, in actual application, because the infrared light is invisible, to help the user perceive a location of the infrared light, in some embodiments of this application, an identifier (for example, a mouse cursor) may be designed in a UI to identify a real-time location of the infrared light spot. Alternatively, in some embodiments of this application, a visible light emitter may be disposed in the infrared light emitter 200, and a direction of light emitted by the visible light emitter is enabled to be consistent with a direction of light emitted by the VCSEL, so that the light emitted by the visible light emitter is used as guide light, to help the user perceive the location of the infrared light.

The foregoing describes in detail some embodiments of this application with reference to FIG. 1 to FIG. 9B. The photoelectric sensor array 130 is disposed in the LCD of the electronic device 100, and communication is performed on or off the screen of the electronic device 100 with the photoelectric sensor array 130 in the electronic device 100 by using the infrared light emitter 200. Therefore, functions of on-screen interaction and off-screen interaction between the user and the electronic device 100 can be implemented by using relatively low costs.

However, in actual application, in addition to the infrared light emitted by the infrared light emitter 200 that matches the liquid crystal module, other infrared light that belongs to the response wavelength range of the infrared PD 132 may exist in space. The infrared light causes interference to positioning by the system, and affects positioning accuracy. In view of this, this embodiment of this application further provides a solution for eliminating interference by modulating, by using a pulse, an infrared light signal sent by the infrared light emitter 200.

With reference to FIG. 10A and FIG. 10B, the following describes a solution for improving interference immunity of the system by modulating the infrared light signal by using the pulse.

In some embodiments of this application, the infrared light emitter 200 may further include a pulse drive apparatus, configured to modulate the infrared light signal by using the pulse, so that the light emitted by the infrared light emitter 200 is a pulsed infrared light signal, and a modulation frequency of the infrared light emitter 200 may be set to half of a drive frequency of the infrared PD array. In this case, a signal, of the PD array, collected by the processor 109 of the electronic device 100 is changed. In two adjacent frames of data, only one frame of data indicates that the infrared light emitted by the infrared light emitter is collected, and the other frame of data indicates that the infrared light emitted by the infrared light emitter is not collected.

A control system of the infrared PD array 130 shown in FIG. 8 is used as an example. It is assumed that the drive frequency of the control unit in the infrared PD array 130 is 240 Hz, that is, 240 frames of light intensity data of the PD array is obtained per second. In this case, in an embodiment of this application, the frequency of the infrared light emitter that matches the infrared PD array may be set to half of the drive frequency of the infrared PD array, namely, 120 Hz. In this case, the 240 frames of data collected by the control unit 810 are changed. In two adjacent frames of data, only one frame of data indicates that the infrared light emitted by the infrared light emitter is collected, and the other frame of data indicates that the infrared light emitted by the infrared light emitter is not collected.

It is assumed that the infrared light spot covers nine infrared PDs 132 arranged based on a 3*3 matrix (as shown in FIG. 9A). In this case, in an ideal case in which no other infrared light causes interference in space in which the electronic device 100 is located, two adjacent frames of data corresponding to the nine infrared PDs 132 that receive the infrared light may be respectively shown in FIG. 10A and FIG. 10B, that is, as shown in FIG. 10A, a $k^{th}$ frame of data is an intensity value of the infrared light received by each infrared photoelectric sensor, and as shown in FIG. 10B, the light intensity value corresponding to each infrared photoelectric sensor in a $(k+1)^{th}$ frame of data is 0.

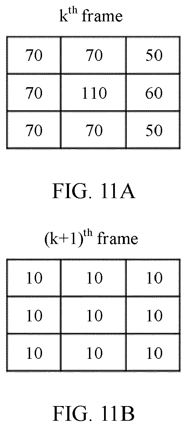

In actual application, generally, there is no such ideal case. When another interference signal (for example, infrared light generated by an indoor light source) exists in the space in which the electronic device 100 is located, an interference signal exists in each frame of signal collected by the control unit 810, that is, the $k^{th}$ frame of data includes both the intensity data of the infrared light emitted by the infrared light emitter and interference signal data, and the (k+1)<sup>th</sup> frame of data includes only interference signal data. The k<sup>th</sup> frame of data and the (k+1)<sup>th</sup> frame of data may be respectively shown in FIG. 11A and FIG. 11B. In this case, the interference light signal may be removed by obtaining a difference between two adjacent frames of data, and the received infrared signal emitted by the infrared light emitter is retained.

The infrared light signal is modulated into half of the drive frequency of the control unit of the photoelectric sensor array by using the pulse signal. Therefore, the interference light signal may be removed by obtaining a difference between two adjacent frames of data, to effectively improve interference immunity of the system. In addition, a frequency of a received infrared light signal is determined, so that the electronic device can also more easily determine whether the received infrared light signal is infrared light emitted by an infrared light emitter that matches the electronic device.

In this embodiment provided in this application, through cooperation between the infrared light emitter and the specially designed liquid crystal module in the LCD, the infrared light emitter may serve as an on-screen interaction tool such as a writing pen, to implement on-screen interaction with the LCD nearby. In addition, the infrared light emitter may also serve as an off-screen interaction tool such as a remote control and a mouse, to implement off-screen interaction with the LCD remotely. This embodiment provided in this application may be applied to various scenarios such as on-screen writing, living room games, and remote control.

It should be understood that, although the terms "first", "second", and the like may be used in this specification to describe each feature, these features should not be limited by these terms. These terms are used only for distinguishing, and cannot be understood as an indication or implication of relative importance. For example, without departing from the scope of the example embodiments, a first feature may be referred to as a second feature, and similarly, the second feature may be referred to as the first feature.

In the descriptions of this application, it should be further noted that, unless otherwise specified or limited, terms "dispose", "communicate", and "connect" shall be understood in a broad sense, for example, may be a fixed connection, a detachable connection, or an integrated connection, may be a mechanical connection or an electrical connection, may be a direct connection or an indirect connection by using an intermediate medium, or may be a connection between the inside of two elements. For persons of ordinary skill in the art, specific meanings of the foregoing terms in embodiments may be understood based on a specific situation.

In addition, directions or location relationships indicated by the terms "up", "down", "left", "right", "front", "rear", and the like that are used in the foregoing descriptions are directions or location relationships that are shown based on the accompanying drawings, and are merely used to describe the present invention easily and simplify the descriptions, but are not used to indicate or imply that an apparatus or an element needs to have a specific direction or needs to be constructed and operated in a specific direction, and therefore cannot be understood as a limitation on the present invention.

In addition, the terms "have" and "include" are synonyms unless otherwise specified in the context. The phrase "A/B" indicates "A or B". The phrase "A and/or B" indicates "(A), (B), or (A and B)".

In addition, various operations are described, in a manner that is most helpful in understanding the illustrative embodiments, as a plurality of operations separated from each other. However, the described sequence should not be construed as implying that these operations need to depend on the described sequence, and many of the operations may be implemented in parallel, concurrently, or simultaneously. In addition, the sequence of the operations may be rearranged. When the described operations are completed, the processing may be terminated. However, there may also be additional operations that are not included in the accompanying drawings. The processing may correspond to a method, a function, a procedure, a subroutine, a subprogram, and the like.

References to "one embodiment", "embodiments", "illustrative embodiments", and the like in this specification indicate that the described embodiments may include specific features, structures, or properties, but each embodiment may or may not necessarily include the specific features, structures, or properties. Moreover, these phrases are not necessarily specific to a same embodiment. In addition, when the specific features are described with reference to specific embodiments, knowledge of persons skilled in the art can affect a combination of these features and other embodiments, regardless of whether embodiments are specifically described.

Embodiments of this application are described above in detail with reference to the accompanying drawings. However, use of the technical solutions of this application is not limited to the various applications mentioned in embodiments of the present patent, and various structures and variations may be easily implemented with reference to the technical solutions of this application, to achieve various beneficial effects mentioned in this specification. Within the scope of knowledge of persons of ordinary skill in the art, all changes made without departing from the objective of this application shall fall within the scope of this application.

**Claims**

1. A liquid crystal module, comprising a liquid crystal panel, a backlight unit, and a photoelectric sensor array, wherein the photoelectric sensor array, the backlight unit, and the liquid crystal panel are sequentially disposed in a stacked manner;

   the backlight unit comprises a reflection component, and at least a partial region of the reflection component is an infrared transmission region in which infrared light can be transmitted; and
   the photoelectric sensor array comprises a plurality of photoelectric sensors, and the plurality of photoelectric sensors can receive the infrared light transmitted through the infrared transmission region.

2. The liquid crystal module according to claim 1, wherein
   a plurality of holes are disposed on the reflection component, and a region in which the plurality of holes are located is the infrared transmission region.

3. The liquid crystal module according to claim 2, wherein
   the plurality of holes are in a one-to-one correspondence with the plurality of photoelectric sensors in the photoelectric sensor array.

4. The liquid crystal module according to claim 3, wherein

   selective reflection components are disposed on surfaces of the plurality of photoelectric sensors, to transmit the infrared light passing through the hole and reflect visible light passing through the hole, wherein an area of the selective reflection component is not less than an area of the hole.

5. The liquid crystal module according to claim 2, wherein
   selective reflection components are disposed at the holes of the reflection component, to transmit the infrared light and reflect visible light, wherein an area of the selective reflection component is not less than an area of the hole.

6. The liquid crystal module according to claim 1, wherein
   the reflection component is a selective reflection component that reflects visible light and transmits the infrared light.

7. An electronic device, comprising a memory, a processor, and the liquid crystal module according to any one of claims 1 to 6, wherein

   the memory is configured to store instructions and locations of all photoelectric sensors in the photoelectric sensor array; and
   the processor is configured to: read the instructions and the locations of the photoelectric sensors, and determine, based on the locations of the photoelectric sensors and intensity of infrared light received by the photoelectric sensors, a location at which the infrared light is projected on the liquid crystal panel.

8. The electronic device according to claim 7, wherein the processor is configured to:

   perform Gaussian fitting on the locations of the photoelectric sensors and the intensity of the infrared light received by the photoelectric sensors, to obtain a location corresponding to an intensity peak, wherein the intensity peak is an intensity peak of the infrared light received by the photoelectric sensors; and
   use the location corresponding to the intensity peak as the location at which the infrared light is projected on the liquid crystal panel.

9. The electronic device according to claim 7, wherein the processor is configured to:

   determine highest intensity in the intensity of the infrared light received by the photoelectric sensors; and
   use, as the location at which the infrared light is projected on the liquid crystal panel, a location of a photoelectric sensor that receives the highest intensity.

10. The electronic device according to claim 7, wherein the infrared light is a pulsed infrared light signal, and a frequency of the pulsed infrared light signal is half of a drive frequency of the photoelectric sensor array.

11. A screen interaction system, comprising an electronic device and an infrared light emitter, wherein

the infrared light emitter is configured to emit infrared light; and
the electronic device comprises a liquid crystal module, and the liquid crystal module comprises a liquid crystal panel, a backlight unit, and a photoelectric sensor array, wherein the photoelectric sensor array, the backlight unit, and the liquid crystal panel are sequentially disposed in a stacked manner; the backlight unit comprises a reflection component, the reflection component is configured to reflect visible light, and at least a partial region of the reflection component is an infrared transmission region in which the infrared light emitted by the infrared light emitter can be transmitted; and the photoelectric sensor array comprises a plurality of photoelectric sensors, and the plurality of photoelectric sensors can receive the infrared light transmitted through the infrared transmission region.

12. The screen interaction system according to claim 11, wherein the infrared light emitter comprises:

a pulse drive device, configured to modulate the infrared light emitted by the infrared light emitter, so that the light emitted by the infrared light emitter is a pulsed infrared light signal, wherein
a frequency of the pulsed infrared light signal is half of a drive frequency of the photoelectric sensor array.

<u>10</u>

FIG. 1

<u>100</u>

FIG. 2

130

131    132

Drive board

133

FIG. 3

200

201

202

203

FIG. 4

123

401 402

FIG. 5A

131 132 1320

FIG. 5B

123 501 502

FIG. 6

FIG. 7

FIG. 8

**210** **131** **132**

FIG. 9A

| 60 | 60 | 40 |
|----|----|----|
| 60 | 100 | 50 |
| 60 | 60 | 40 |

FIG. 9B

$k^{th}$ frame

| 60 | 60 | 40 |
|----|----|----|
| 60 | 100 | 50 |
| 60 | 60 | 40 |

FIG. 10A

$(k+1)^{th}$ frame

| 0 | 0 | 0 |
|---|---|---|
| 0 | 0 | 0 |
| 0 | 0 | 0 |

FIG. 10B

k<sup>th</sup> frame

| 70 | 70 | 50 |
|----|----|----|
| 70 | 110 | 60 |
| 70 | 70 | 50 |

FIG. 11A

(k+1)<sup>th</sup> frame

| 10 | 10 | 10 |
|----|----|----|
| 10 | 10 | 10 |
| 10 | 10 | 10 |

FIG. 11B

## INTERNATIONAL SEARCH REPORT

| International application No. |
|---|
| **PCT/CN2021/070876** |

**A.     CLASSIFICATION OF SUBJECT MATTER**

G02F 1/1333(2006.01)i

According to International Patent Classification (IPC) or to both national classification and IPC

**B.     FIELDS SEARCHED**

Minimum documentation searched (classification system followed by classification symbols)

G02F

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 光电传感, 光电感测, 光, 传感, 感测, 检测, 红外, 反射, 背光, 光源, PD, photo+, diode?, light+, sensor?, detect+, reflect, infrared+

**C.     DOCUMENTS CONSIDERED TO BE RELEVANT**

| Category* | Citation of document, with indication, where appropriate, of the relevant passages | Relevant to claim No. |
|---|---|---|
| X | US 2014183342 A1 (APPLE INC.) 03 July 2014 (2014-07-03) description, paragraphs [0032]-[0092], and figures 1-14 | 1-6, 11, 12 |
| Y | US 2014183342 A1 (APPLE INC.) 03 July 2014 (2014-07-03) description, paragraphs [0032]-[0092], and figures 1-14 | 7-10 |
| Y | CN 109100886 A (INNOLUX CORPORATION) 28 December 2018 (2018-12-28) description paragraphs [0021]-[0059], figures 1A-8C | 7-10 |
| A | CN 208488620 U (OPPO GUANGDONG MOBILE COMMUNICATIONS CO., LTD.) 12 February 2019 (2019-02-12) entire document | 1-12 |
| A | CN 101153972 A (LG. PHILIPS LCD CO., LTD.) 02 April 2008 (2008-04-02) entire document | 1-12 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 March 2021** | **30 March 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/070876**

| Patent document cited in search report | | | Publication date (day/month/year) | Patent family member(s) | | | Publication date (day/month/year) |
|---|---|---|---|---|---|---|---|
| US | 2014183342 | A1 | 03 July 2014 | US | 9310843 | B2 | 12 April 2016 |
| | | | | WO | 2014107284 | A2 | 10 July 2014 |
| | | | | TW | I512962 | B | 11 December 2015 |
| | | | | TW | 201428950 | A | 16 July 2014 |
| | | | | WO | 2014107284 | A3 | 18 June 2015 |
| CN | 109100886 | A | 28 December 2018 | | None | | |
| CN | 208488620 | U | 12 February 2019 | | None | | |
| CN | 101153972 | A | 02 April 2008 | JP | 2008083675 | A | 10 April 2008 |
| | | | | CN | 100570443 | C | 16 December 2009 |
| | | | | US | 8350827 | B2 | 08 January 2013 |
| | | | | DE | 102007034772 | A1 | 10 April 2008 |
| | | | | KR | 101420424 | B1 | 16 July 2014 |
| | | | | DE | 102007034772 | B4 | 07 April 2016 |
| | | | | US | 2008074401 | A1 | 27 March 2008 |
| | | | | JP | 4567028 | B2 | 20 October 2010 |
| | | | | KR | 20080028270 | A | 31 March 2008 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010095747